# EUROPEAN PATENT SPECIFICATION

(11) **EP 2 615 390 B1**
(45) Date of publication and mention of the grant of the patent: **26.08.2015**
(21) Application number: 12425004.4
(22) Date of filing: 11.01.2012
(51) Int. Cl.: F24J 2/52, F24J 2/46, H01L 31/042

(54) **Modular support structure for constructing roofing using photovoltaic and/or thermal solar panels**
Modulare Stützstruktur zum Bau eines Dachs unter Verwendung von Photovoltaik- und/oder thermischen Solarpanelen
Structure de support modulaire pour la construction d'un toit au moyen de panneaux solaires photovoltaïques et/ou thermiques

(43) Date of publication of application: 17.07.2013
(73) Proprietor: Dentro il Sole S.r.l., 20064 Gorgonzola (MI) (IT); Solarlight Italia S.r.l., 06056 Massa Martana (PG) (IT)
(72) Inventor: Della Giovanna, Luca, 20080 Carpiano (MI) (IT); Mattavelli, Giuliano, 20064 Gorgonzola (MI) (IT); Caimi, Sergio Renato, 20821 Meda (MB) (IT)
(74) Representative: Lampis, Marco

(56) References cited:
- EP-A2- 2 242 112
- FR-A1- 2 942 828
- JP-A- 2 024 444
- JP-A- 57 134 663

## Description

The present invention relates to a modular support structure for constructing roofing using photovoltaic and/or thermal solar panels.

At present photovoltaic panel or solar panel installations which are mounted on buildings, in particular on roofs, are becoming increasingly widespread. Usually the panels are mounted by arranging them on existing roofs using simple structures for fastening the individual panels. These installations are complicated by the need to design in each case a suitable assembly solution. Moreover, in the case of panels comprising fluid circulating components, the arrangement of the hydraulic connections is complex and is often unattractive.

Recently solutions have been proposed where the panels, with the aid of special assembly components, form an integral part of the roofing, replacing the normal roof covering. In this case, however, it is required to ensure the water tightness of the roofing, a mechanical strength comparable to that of the building component which is replaced, and a thermal resistance such as not to adversely affect the heat insulation of the building. For this purpose special elements have been proposed for joining together the panels so as to provide a continuous panel surface area. Examples can be seen in patent documents JP 2024444 A and JP 57 134 663 A.

The known solutions are, however, not yet satisfactory both from the point of the hydraulic sealing effect and mechanical strength and from the point of view of ease of installation - in particular as regards the hydraulic circuits - and the resultant appearance. It should also be considered that the structure must maintain its watertightness and weather-proof characteristics for several decades.

The general object of the present invention is to provide a modular support system which is able to provide, in an easy manner while ensuring an acceptable appearance, photovoltaic panel and/or thermal solar panel surfaces which have structural characteristics suitable for replacing traditional covering surfaces, in particular roofs.

In view of this object the idea which has occurred according to the invention is defined by the features of claim 1.

In order to illustrate more clearly the innovative principles of the present invention and its advantages compared to the prior art, an example of embodiment applying these principles will be described below, with the aid of the accompanying drawings. In the drawings:
- Figure 1 shows a partial, perspective, schematic view of a structure according to the invention arranged to form a roof;
- Figure 2 shows an enlarged schematic view of a connection zone of the structure according to the invention;
- Figure 3 shows a schematic cross-sectional view of a longitudinal joining zone of panels according to the invention;
- Figure 4 shows a schematic cross-sectional view of a longitudinal joining zone between ends of panels according to the invention;
- Figure 5 shows a partial schematic view, similar to that of Figure 1, but with the structure not having a top panel layer.

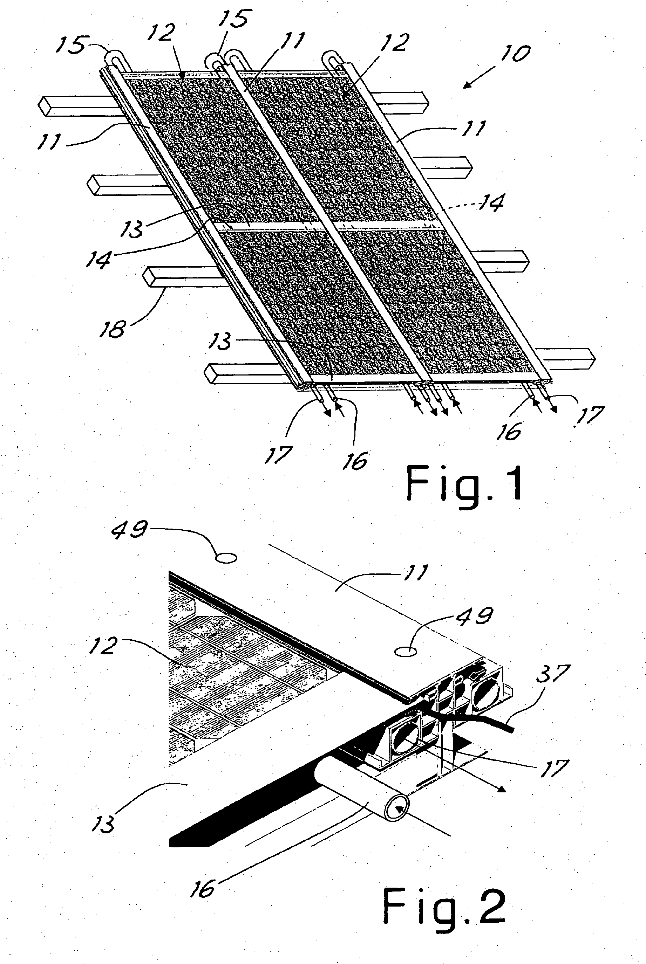

With reference to the figures, Figure 1 shows, denoted generally by 10, a modular structure designed according to the invention.

The example in the figure shows a structure which forms a roof covering.

The structure 10 comprises longitudinal support elements 11, which are arranged along the pitch of the roof, advantageously from its top part or ridge down to the gutter zone. Modules 12 comprising photovoltaic and/or thermal solar panels are arranged between the longitudinal elements 11, as will be clarified below. The modules 12 are arranged in series along the pairs of longitudinal elements, while the transverse zones of and between the modules are covered by transverse elements 13.

The transverse elements and longitudinal elements are advantageously formed as suitably shaped profiles. These profiles may be made of metal, in particular aluminium, or advantageously (owing to their form) of fibreglass. In this latter case it has been found to be particularly advantageous to add a carbon filler to the fibreglass so that it is more conductive and so as to ensure that the structure retains the same electric potential. The structure is intended to be rested on and fastened to a surface to be covered. As can be seen again in Figure 1, the surface may for example be formed by support beams 18 forming part of the normal structure of the roof. These beams may be transverse and/or longitudinal with a suitable interval so to be able to support the longitudinal elements 11 of the structure. Alternatively, the support surface may also be continuous, as will be clarified below.

The set of longitudinal elements 11 and transverse elements 13 allow the assembly, onsite, of a roofing formed by photovoltaic and/or thermal elements having covering or water sealing functions. The figures show two rows of modules, each composed of two modules, but the number of modules 12 may be much greater, as will be obvious for the person skilled in the art, since the structure is modular.

The hydraulic circuits of the panels comprise intermediate pipes 14 connecting the series of panels and coupling pipes 15 for the return flow to the top of each series. The bottom of the structure is provided with both inlet pipes 16 and outlet pipes 17 for the fluids circulating inside the panels. These inlet and outlet pipes are therefore advantageously arranged along the same side of the structure and in particular in the gutter zone of the roofing. It is thus easy to perform the connection to the known fluid circulation and heat recovery systems of panels (for example of the heat pump type), which are not described further here since they form part of the prior art and can be easily imagined by the person skilled in the art.

Figure 2 shows in greater detail a connection zone of the structure, in the vicinity of a corner of a longitudinal element 11 and transverse element 13. As can be seen in this figure, the outlet duct (providing the return from the top end of the panels) is formed inside the longitudinal element.

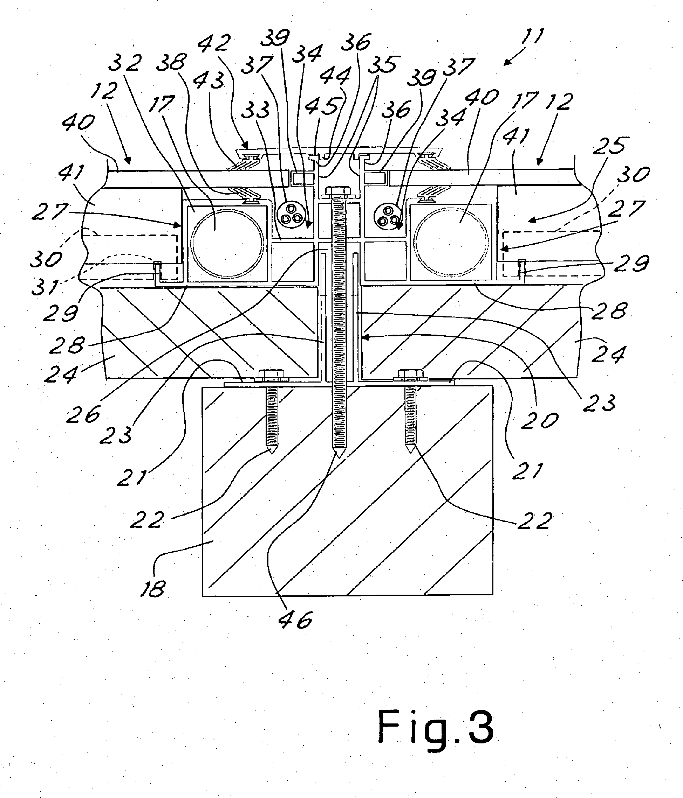

Figure 3 shows in greater detail a cross-section of the longitudinal element 11 which forms a support and joining piece between adjacent rows of panels. The module 12 is advantageously formed with a top part or panel 40 which is advantageously the photovoltaic panel and an underlying bottom part or panel 41 which forms the thermal fluid-circulating panel. The two - photovoltaic and thermal - panels are arranged in close thermal contact with each other, in accordance with a known technology for keeping the temperature of the photovoltaic panel in a maximum efficiency range (for example around 40°C) by means of fluid circulation.

The element 11 is advantageously formed by three profiles which are arranged on top of each other and suitably interconnected and is symmetrical with respect to a plane longitudinal relative to its length and perpendicular to its fixing surface.

A first profile or bottom profile 20 is formed generally as an overturned T with two side flanges 21 for performing fixing to the support surface 18 by means of screws 22 arranged along the length of the profile. The central part of the profile 20 comprises two vertical and parallel walls 23. Thermal insulating panels 24 may be rested with their side edges on the side flanges of the bottom profile and adjacent to the vertical walls 23. These insulating panels may be made for example of expanded polyurethane. The panels may also be used for sound insulation.

If the supporting surface to be covered is of the type consisting of beams or in any case is not a solid surface, it is possible to choose insulating panels which also have the property of forming a load-bearing surface in addition to providing thermal and/or sound insulation. For example, it is possible to use known wall sandwich panels, of the type usually comprising two ribbed outer metal sheets between which a layer of heat-insulating material is enclosed.

In the case where the support surface to be covered is a continuous surface which is sufficiently strong then the insulating panels, if necessary, may not have any supporting function at all and even be totally flexible.

The bottom profile 20 has vertical walls 23 with a height suitable for the thickness of the panels 24. Advantageously, several bottom profiles 20 with different heights may be provided so that it is possible to choose the bottom profile from among a series of bottom profiles of different height - and therefore adapt the element 11 - depending on the desired thickness. If the thermal insulating or supporting function of the insulating panels is not necessary and therefore insulating panels are not provided, the bottom profiles may also have a minimum height or not be present.

A second profile or middle profile 25 is mounted on top of the bottom profile 20 and has at the bottom a central groove 26 which receives the top end of the walls 23 of the walls 23 of the bottom profile.

Along the two sides of the central groove 26, the middle profile 25 has two flanges 27, each of which defines at the bottom a surface 28 facing the respective flange 21 of the bottom profile and terminating in support edges, advantageously provided with a lug 29 folded upwards. The surface 28 allows gripping of the edge of a panel 24 so as to fix it stably to the structure. The middle profile is fixed to the support beam 18 by means of central screws 46 which pass through the bottom profile and which thus also allow the edge of the insulating panel 24 to be gripped.

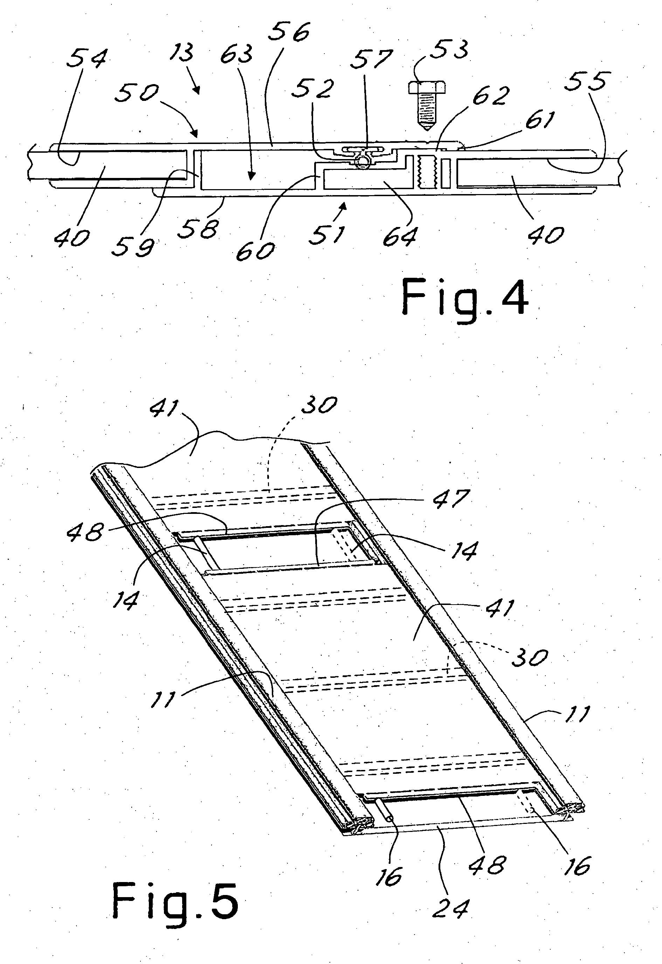

The support edge 29 forms a support for transverse components between adjacent longitudinal elements. These transverse components may be the thermal panels 41 and/or crosspieces 30 which advantageously are formed with a box-shaped profile having a rectangular cross-section. For fastening to the edge, each crosspiece 30 has a transverse notch 31 inside which the free edge of the lug 29, advantageously present in the support edge, is inserted.As shown for example in broken lines in Figure 5, the crosspieces 30, which are arranged at a suitable interval along the length of the longitudinal element 11, provide a transverse support so that the structure may be safely walked over.

Owing to the use of crosspieces which can be assembled at a suitable distance it is possible to ensure that even the photovoltaic panels alone (which are usually not sufficiently strong for this purpose) may be walked on.

On the other hand, these crosspieces may be dispensed with if their load-bearing function is not required, for example because the thermal panels are sufficiently strong or if their supporting function is performed by the insulating panels 24 having a suitable structure.

The same thermal panels 41 may have a groove for engagement with the lug 29.

Above the surface 28, the side flange 27 has, integral therewith, a box-shaped part 32 (advantageously with a square cross-section) which forms or receives the outlet duct 17 which extends along the entire longitudinal element. The duct 17 may be formed as with one piece with the profile or may be advantageously a pipe (preferably made of plastic) which is inserted at the factory inside the seat formed by the box-shaped part 32. The two ends of the pipe may also have a suitable union or be able to be connected by means of any known method.

In order to provide the structure with greater rigidity, the box-shaped part 32 is connected to the central zone of the middle profile by means of a connecting wall 33 which is parallel to and situated at a distance above the surface 28. A channel 34 is formed advantageously between the box-shaped part 32 and a vertical wall 35 of a pair of vertical central walls 35 of the middle profile which extend upwards so as to form a top end 36 of the middle profile itself.

The channel 34, the bottom of which is advantageously formed by the same connecting wall 33, is suitable for receiving the cables 37 for connecting the photovoltaic panels.

As can be clearly seen again in Figure 3, the top part 40 of the panel or module 12 projects laterally so as to rest on a special lip seal 38 mounted on the top side of the box-shaped part 32.

In order to ensure correct lateral positioning of the panel, the vertical wall 35 has, projecting from it by a suitable amount, a box-shaped part 39 on which the edge of the part 40 of the panel rests. The bottom part 41 of the panel instead rests laterally against the box-shaped part 32.

The third profile which forms the longitudinal element 11 is a closing or covering profile 42 which is arranged parallel to the top side of the panels which has, on its bottom face, close to its two lateral ends, a pair of lip seals 43 which are arranged above the lip seals 38 on the other side of the panel. In this way a hydraulic seal for the rainwater which falls onto the outer surface of the structure is provided. Advantageously the underlying channel 34 may act as a drainage channel for any water which may seep through the seals and fall from the overlying edge of the outer panel. The closing profile 42 rests centrally on the pair of ends 36 of the middle profile 25 and has advantageously bottom ribs 44 for centring on these ends 36. Thermal insulation strips 45 for ensuring a thermal break in relation to the exterior may be provided between ends 36 (advantageously bent outwardly in the form of an L) and the bottom side of the closing profile.

The transverse joints between the panels are instead covered by the transverse elements 13. Advantageously, as shown in Figure 4, these transverse elements are formed by means of two matching profiles 50, 51 which are mounted respectively on the "downstream" part and on the "upstream" part of each photovoltaic panel. These profiles are advantageously installed at the factory on the panels, using an industrial process, in order to ensure impermeability and facilitate and speed up the process for assembly of the structure.

The "downstream" profile of one panel will mate with the "upstream" profile of the following panel in the series, with a suitable seal 52 arranged in between. Self-tapping screws 53 ensure stable fixing once the panels have been assembled in position. These transverse profiles, once assembled, also allow the surface thus formed to be walked on. In particular, the two profiles 50 and 51 comprise a respective U-shaped edge which defines a seat, 54 and 55 respectively, for receiving the corresponding edge of the photovoltaic panel. Sealed fixing of the panel inside the seat may be easily performed at the factory by means of a suitable glue for example.

The profile 50, or outer profile, comprises a flange 56 which projects outwards from the top side of the U and in a direction parallel to the surface of the panel. This flange houses the seal 52 on its bottom side by means of a suitable shaped seat 57.

The profile 51, or inner profile, comprises in turn a flange 58 which projects outwards from the bottom side of the U and in a direction parallel to the surface of the panel. The flange terminates advantageously in an L-shaped contact surface 59 for receiving and aligning the front edge of the profile 50 to which it is joined. The flange also comprises a further box-shaped zone 60 of the profile 51, the top side of which forms the support surface for the seal 52.

For correct alignment and fixing together of the two profiles, advantageously a tooth 61 is also provided, said tooth projecting from the end of the flange 56 of the profile 50 and engaging with a matching step 61 on the top surface of the profile 51.

The profile 51 defines above its flange 58 (by means of the vertical part of the L-shaped contact surface (59) and a vertical wall of the box-shaped part 60) a drainage channel 63 for any water which might filter through the seal 52. A further drainage channel 64 is provided inside the box-shaped part 60 and has the function of collecting any water leakages in the region of the screws 53.

Any water present in these channels 63 and 64 is conveyed along the sides and in turn enters into the drainage channel 34 present on the longitudinal element.

Owing to the structure described, assembly of the entire structure is simple and reliable. In fact, it is merely required to fix the bottom profiles 20 by means of the screws 22, making sure that they are parallel and correctly spaced from each other. The profiles will be chosen with a height suitable for the desired insulating panels 24. The insulating panels 24 may then be placed between the profiles 20.

Then the middle profiles 25 may be mounted on the bottom profiles and the entire assembly may be clamped by means of the screw 46, ensuring the stability of the support.

The crosspieces 30, if necessary or preferable, may be fastened between the middle profiles and may amongst other things ensure that the adjacent profiles are in fact parallel and correctly spaced. If they are not required for supporting the panels, the crosspieces may only be arranged between one panel and the next one in the series.

The thermal panels 41 may then be positioned (on the crosspieces or at the ends of the flanges 29) and may be hydraulically connected together, as can also be clearly seen in Figure 5.

The thermal panels may be advantageously of the type comprising a plurality of fluid circulating pipes arranged parallel underneath the top surface of the panel formed, for example, by an aluminium plate. The pipes may emerge from the panel at its two opposite ends and be interconnected in parallel by means of headers 47 and 48. The headers may in turn comprise one or more unions. It is thus possible to provide the connections 41 between the panels, for example using known flexible connecting pipes, the bottom inlet end connections 16 and the top outlet end connections 15.

The structure of the single panels is not further described or shown here, being of the type known per se and able to be easily imagined by the person skilled in the art.

The outlet connections of the last panels in each series of panels are connected by means of U-shaped pipes to the corresponding end of the ducts 17 so that the fluid return line passes back, inside the longitudinal elements 11, to the other end of the series, in the vicinity of the inlet unions 18 (as can also be clearly seen in Figure 2).

The photovoltaic panels 40 are positioned on top of the thermal panels 41 and are suitably centred between the longitudinal profiles by means of the box-shaped projections 39. The cables for connecting together the panels may be placed inside the channels 34 so that they also reach the bottom of the series where the hydraulic connections of the installation are also present. The electrical connections will then be routed towards the electronic power supply management system, which is known and therefore not described or shown further. Once the panels are arranged in position, the profiles 50 and 51 assembled on each other may be fixed together by means of the special screws 53.

Finally, the closing profiles 42 may be positioned and locked via screws 49 which are screwed centrally onto the underlying middle profiles. In this way locking of the panels is completed and the seals 38 and 43 are stably compressed.

At this point it is clear how the predefined objects have been achieved. With the structure according to the invention it is possible, in an easy and safe manner, to perform assembly of a roofing formed by photovoltaic and/or thermal panels with water-sealing and load-resistant properties which are comparable if not superior to those of a conventional roof. The hydraulic connections are easy to perform and the final end appearance is more than satisfactory. Moreover, the working life is also guaranteed in the event of a subsequent leakage affecting the seals, for example due to ageing thereof. The structure may be easily designed with dimensions such that it is possible to use for the layer of panels 24 most of the wall panels which are currently available on the market. This results in a significant flexibility of the product.

With the use of wall panels, it is possible to ensure, as a result of their load-carrying capacity, a beam structure which can be walked on. Moreover by suitably choosing the thickness of the panel it is possible to achieve an optimum performance from the point of view of heat and/or sound insulation.

Moreover, owing to the type of connection between bottom profile and middle profile of the longitudinal element, it is possible to fix together the longitudinal structure and the wall panels, thus providing the assembly with a suitable strength.

Obviously, the above description of an embodiment applying the innovative principles of the present invention is provided by way of example of these innovative principles and must therefore not be regarded as limiting the scope of the rights claimed herein. For example, the exact forms and proportions of the various parts may vary depending on the specific practical requirements.

The photovoltaic panel may also be formed as one piece with the thermal panel, using various known construction technology.

The length of the longitudinal elements may be of any nature so as to adapt them to the height of the surface to be covered. If necessary, these element can also be easily cut to size on-site.

Although, for the sake of simplicity, a covering structure for a roof has been described, it is easy to imagine using the structure according to the invention also to form walls. In this case fastening devices may also be provided in order to prevent the panels slipping along the longitudinal elements.

## Claims

1. Support structure for constructing water-tight roofing using modules (12) formed by photovoltaic and/or thermal solar panels, comprising longitudinal elements (11), which are arranged between series of aligned modules (12), and transverse elements (13) between one module and the next one in each series,
the longitudinal elements (11) comprising in turn a bottom profile (20), a middle profile (25) and a covering profile (42) which are arranged on top of each other and are interconnected with each other,
the bottom profile (20) having a cross-section comprising side flanges (21) and two parallel facing walls (23),
the middle profile (25) being mounted on top of the bottom profile (20) and having at the bottom a central groove (26)
the middle profile (25) having along the sides of its central groove (26) two opposite side flanges (27), each of which defines at the bottom a surface (28) situated above and facing the respective flange (21) of the bottom profile (20), the flanges (27) of the middle profile (25) providing support ends (29) for components (30, 41) arranged between adjacent longitudinal elements (11), the middle profile (25) being fastened to the surface to be covered (18) by means of central screws (46) which pass through the bottom profile (20) between its two parallel facing walls (23),
the middle profile (25) also having central walls (35) which are vertical and parallel and with top ends (36) on which the covering profile (42) which is fastened to the middle profile (25) rests,
**characterized in that**
the bottom profile (20) having a cross-section in the form of an overturned T with said side flanges (21) intended to be fastened onto a surface (18) to be covered with the support structure, and a central part of the T which comprises two parallel facing walls (23),
the central groove (26) at the bottom of the middle profile (25) slidingly receives a top end of the said walls (23) of the bottom profile (20),
each side flange (27) of the middle profile (25) also having, formed as one piece therewith at the top, a box-shaped part (32) which forms or receives a duct (17) which extends along the entire longitudinal element (11) and which is intended to convey a fluid flowing out of the unions (15) at one end of the series of interconnected thermal solar panels present between a pair of longitudinal elements (11), into the vicinity of an opposite end of said series of interconnected thermal solar panels and which has inlet unions (16) for the fluid flow into the series of thermal solar panels.
there being provided above the box-shaped part (32) a seal (38) on which the side edge of a top panel (40) of a module may rest,
the covering profile (42) being fastened by means of screws (49) to the middle profile (25);
the covering profile (42) having at the bottom a pair of seals (43) which are arranged above the seals (38) of the middle profile (25) and which are situated on the other side of a top panel (40) when mounted, so as to form a hydraulic seal for the water which falls onto the outer surface of the support structure.

2. Structure according to Claim 1, **characterized in that** the duct (17) is formed by a pipe inserted inside the said box-shaped part (32).

3. Structure according to Claim 1, **characterized in that** the longitudinal elements (11) and/or the transverse elements (13) are at least partially composed of fibreglass with a carbon filler.

4. Structure according to Claim 1, **characterized in that** a channel (34) is formed between each box-shaped part (32) of the middle profile (25) and the closest of the said central walls (35), said channel being suitable for receiving cables (37) for connecting photovoltaic panels forming the modules and providing a drainage channel for any water filtering through the said seals (43 and 38).

5. Structure according to Claim 1, **characterized in that** the longitudinal element (11) is symmetrical with respect to a plane longitudinal in relation to its length and perpendicular to its fixing surface.

6. Structure according to Claim 1, **characterized in that** the said supporting ends (29) are formed by upwardly folded lugs.

7. Structure according to Claim 1, **characterized in that** the said components (30) comprise thermal solar panels (41) and/or supporting crosspieces.

8. Structure according to Claim 7, **characterized in that** the said supporting crosspieces are box-shaped crosspieces with a transverse notch (31) at each end inside which an upwardly folded lug of the said supporting ends (29) engages.

9. Structure according to Claim 1, **characterized in that** insulating panels (24) for heat/sound insulation and/or with a load-bearing structure rest with their side edges on the side flanges (21) of the bottom profiles (20) of adjacent longitudinal elements (11) and are gripped between these side flanges (21) and corresponding flanges (29) of the middle profile (25) by tightening said central screws (46).

10. Structure according to Claim 9, **characterized in that** the insulating panels (24) are wall sandwich panels.

11. Structure according to Claim 9, **characterized in that** the bottom profile (20) is chosen, depending on the thickness of the said insulating panels (24), from among a series of bottom profiles (20) with a different height of the said parallel facing walls (23).

12. Structure according to Claim 1, **characterized in that** the transverse elements (13) comprise two matching profiles (50, 51) which are mounted respectively on facing transverse edges of the top panels (40) between the longitudinal elements (11), so as to be arranged on top of each other with a seal (52) arranged in between.

13. Structure according to Claim 12, **characterized in that** the two matching profiles (50 and 51) each comprise a respective U-shaped edge which defines a seat (54 and 55) which receives a corresponding edge of the top panel (40), one of the two profiles, or outer profile (50), comprises a flange (56) which projects outwards from the top side of the U and in a direction parallel to the surface of the panel and the other one of the two profiles, or inner profile (51), comprises in turn a flange (58) which projects outwards from the bottom side of the U and in a direction parallel to the surface of the panel, so that the flange (56) of the outer profile (50) is arranged over the flange (58) of the inner profile (51), with said seal (52) arranged in between.

14. Structure according to Claim 13, **characterized in that** the flange (58) of the inner profile (51) terminates in a L-shaped contact surface (59) for receiving a front edge of the outer profile (50) to which it is joined and comprises a further box-shaped zone (60), the top side of which forms a support surface for the said seal (52).

15. Structure according to Claim 13, **characterized in that**, close to the end of the flange (56) of the outer profile (50), a tooth (61) projects at the bottom and engages with a matching step (61) on a corresponding top surface of the inner profile (51) to which it is joined.

16. Structure according to Claim 13, **characterized in that** the inner profile (51) has, above its flange (58), at least one drainage channel (63) for receiving any water seeping through the said seal (52) and for conveying said water towards a channel part (34) inside the longitudinal elements.

17. Structure according to Claim 13, **characterized in that** the flange (58) of the inner profile (51) comprises, arranged thereon, a box-shaped zone (60) which forms a drainage channel (64) for any water seeping through seats of screws (53) for fixing together the inner profile and outer profile joined together, said drainage channel conveying said water towards a channel part (34) in the longitudinal elements.

18. Structure according to Claim 13, **characterized in that** the two matching profiles (50 and 51) are stably bonded with their U-shaped seats (54 and 55) onto the corresponding edges of the top panels (40) which are formed as photovoltaic panels.

19. Structure according to Claim 1, **characterized in that** the box-shaped part (32) is connected to the closest central wall (35) by means of a connecting wall (33) which is parallel to and spaced above the bottom surface (28).

20. Structure according to Claim 1, **characterized in that** a corresponding box-shaped part (39) projects from each central wall (35) of the middle profile and an edge of the photovoltaic panel rests thereon laterally, so as to form an element for centring the panel between adjacent longitudinal elements (11).

21. Structure according to Claim 1, **characterized in that** the covering profile (42) has bottom ribs (44) for centring it on the ends (36) of the middle profile (25) on which it rests, preferably with thermal insulation strips (45) arranged in between.

## Patentansprüche

1. Tragstruktur zum Aufbauen von wasserdichter Bedachung unter Verwendung von Modulen (12), die durch photovoltaische und/oder thermische Solarplatten gebildet werden, umfassend Längselemente (11), die zwischen Reihen von ausgerichteten Modulen (12) angeordnet sind, und Querelemente (13) zwischen einem Modul und dem nächsten in jeder Reihe,
wobei die Längselemente (11) wiederum ein Bodenprofil (20), ein Mittelprofil (25) und ein Abdeckungsprofil (42) umfassen, die aufeinander angeordnet sind und miteinander verbunden sind,
wobei das Bodenprofil (20) einen Querschnitt hat, der Seitenflansche (21) und zwei parallele gegenüberliegende Wände (23) umfasst,
wobei das Mittelprofil (25) auf dem Bodenprofils (20) angebracht ist und an der Unterseite eine mittige Rille (26) hat,
wobei das Mittelprofil (25) entlang der Seiten der mittigen Rille (26) zwei entgegengesetzte Seitenflansche (27) hat, deren jeder an der Unterseite eine Fläche (28) definiert, die oberhalb des jeweiligen Flansches (21) des Bodenprofils (20) und demselben gegenüberliegend angeordnet ist, wobei die Flansche (27) des Mittelprofils (25) Stützenden(29) für Bauteile (30, 41) bereitstellen, die zwischen benachbarten Längselementen (11) angeordnet sind, wobei das Mittelprofil (25) an der abzudeckenden Fläche (18) mit Hilfe von mittigen Schrauben (46) befestigt ist, die zwischen seinen zwei parallelen gegenüberliegenden Wänden (23) durch das Bodenprofil (20) hindurchgehen,
wobei das Mittelprofil (25) ebenfalls mittige Wände (35) hat, die vertikal und parallel und mit oberen Enden (36) versehen sind, auf denen das Abdeckungsprofil (42), das an dem Mittelprofil (25) befestigt ist, gelagert ist,
**dadurch gekennzeichnet, dass**
das Bodenprofil (20) einen Querschnitt in der Form eines umgedrehten T mit den Seitenflanschen (21), die dafür vorgesehen sind, an einer mit der Tragstruktur abzudeckenden Fläche (18) befestigt zu werden, und einem mittigen Teil des T, der zwei parallele gegenüberliegende Wände (23) umfasst, hat,
die mittige Rille (26) an der Unterseite des Mittelprofils (25) gleitend ein oberes Ende der Wände (23) des Bodenprofils (20) aufnimmt,
jeder Seitenflansch (27) des Mittelprofils (25) ebenfalls einen kastenförmigen Teil (32) hat, einstückig mit demselben an der Oberseite geformt, der eine Leitung (17) bildet oder aufnimmt, die sich entlang des gesamten Längselements (11) erstreckt und die dafür vorgesehen ist, ein Fluid, das aus den Verbindungen (15) an einem Ende der Reihe von miteinander verbundenen thermischen Solarplatten strömt, die zwischen einem Paar von Längselementen (11) vorhanden sind, in die Nähe eines entgegengesetzten Endes der Reihe von miteinander verbundenen thermischen Solarplatten zu befördern, und die Einlassverbindungen (16) für den Fluidstrom in die Reihe von thermischen Solarplatten hat,
oberhalb des kastenförmigen Teils (32) eine Dichtung (38) bereitgestellt wird, auf der die Seitenkante einer oberen Platte (40) eines Moduls gelagert werden kann,
das Abdeckungsprofil (42) mit Hilfe von Schrauben (49) an dem Mittelprofil (25) befestigt ist,
das Abdeckungsprofil (42) an der Unterseite ein Paar von Dichtungen (43) hat, die oberhalb der Dichtungen (38) des Mittelprofils (25) angeordnet sind und die auf der anderen Seite einer oberen Platte (40) angeordnet sind, wenn sie angebracht ist, um so eine hydraulische Abdichtung für das Wasser zu bilden, das auf die Außenfläche der Tragstruktur fällt.

2. Struktur nach Anspruch 1, **dadurch gekennzeichnet, dass** die Leitung (17) durch ein innerhalb des kastenförmigen Teils (32) eingesetztes Rohr gebildet wird.

3. Struktur nach Anspruch 1, **dadurch gekennzeichnet, dass** die Längselemente (11) und/oder die Querelemente (13) wenigstens teilweise aus Fiberglas mit einem Kohlenstoff-Füllstoff zusammengesetzt sind.

4. Struktur nach Anspruch 1, **dadurch gekennzeichnet, dass** ein Kanal (34) zwischen jedem kastenförmigen Teil (32) des Mittelprofils (25) und der nächsten der mittigen Wände (35) gebildet wird, wobei der Kanal dafür geeignet ist, Kabel (37) aufzunehmen, um photovoltaische Platten, welche die Module bilden, zu verbinden und einen Ableitungskanal für jegliches Wasser, das durch die Dichtungen (43 und 38) gefiltert wird, bereitzustellen.

5. Struktur nach Anspruch 1, **dadurch gekennzeichnet, dass** das Längselement (11) symmetrisch in Bezug zu einer Ebene, längs im Verhältnis zu seiner Länge und senkrecht zu seiner Befestigungsfläche, ist.

6. Struktur nach Anspruch 1, **dadurch gekennzeichnet, dass** die Stützenden (29) durch nach oben gefaltete Laschen gebildet werden.

7. Struktur nach Anspruch 1, **dadurch gekennzeichnet, dass** die Bauteile (30) thermische Solarplatten (41) und/oder stützende Querträger umfassen.

8. Struktur nach Anspruch 7, **dadurch gekennzeichnet, dass** die stützenden Querträger kastenförmige Querträger sind, mit einer Querkerbe (31) an jedem Ende, innerhalb derer eine nach oben gefaltete Lasche der Stützenden (29) eingreift.

9. Struktur nach Anspruch 1, **dadurch gekennzeichnet, dass** isolierende Tafeln (24) zur Wärme-/Schallisolierung und/oder mit einer lasttragenden Struktur mit ihren Seitenkanten auf den Seitenflanschen (21) der Bodenprofile (20) von benachbarten Längselementen (11) lagern und durch Anziehen der mittigen Schrauben (46) zwischen diesen Seitenflanschen (21) und entsprechenden Flanschen (29) des Mittelprofils (25) ergriffen werden.

10. Struktur nach Anspruch 9, **dadurch gekennzeichnet, dass** die isolierenden Tafeln (24) Wand-Verbundplatten sind.

11. Struktur nach Anspruch 9, **dadurch gekennzeichnet, dass** das Bodenprofil (20), in Abhängigkeit von der Dicke der isolierenden Tafeln (24), aus einer Reihe von Bodenprofilen (20) mit einer unterschiedlichen Höhe der parallelen gegenüberliegenden Wände (23) ausgewählt wird.

12. Struktur nach Anspruch 1, **dadurch gekennzeichnet, dass** die Querelemente (13) zwei zusammenpassende Profile (50, 51) umfassen, die jeweils so an gegenüberliegenden Querkanten der oberen Platten (40) zwischen den Längselementen (11) angebracht sind, dass sie aufeinander angeordnet sind, wobei eine Dichtung (52) dazwischen angeordnet ist.

13. Struktur nach Anspruch 12, **dadurch gekennzeichnet, dass** die zwei zusammenpassenden Profile (50 und 51) jeweils eine U-förmige Kante umfassen, die einen Sitz (54 und 55) definiert, der eine entsprechende Kante der oberen Platte (40) aufnimmt, wobei das eine der zwei Profile oder das äußere Profil (50) einen Flansch (56) umfasst, der von der Oberseite des U aus nach außen und in einer Richtung parallel zu der Oberfläche der Platte vorspringt, und das andere der zwei Profile oder das innere Profil (51) wiederum einen Flansch (58) umfasst, der von der Unterseite des U aus nach außen und in einer Richtung parallel zu der Oberfläche der Platte vorspringt, so dass der Flansch (56) des äußeren Profils (50) über dem Flansch (58) des inneren Profils (51) angeordnet ist, wobei die Dichtung (52) dazwischen angeordnet ist.

14. Struktur nach Anspruch 13, **dadurch gekennzeichnet, dass** der Flansch (58) des inneren Profils (51) in einer L-förmigen Berührungsfläche (59) endet, um eine Vorderkante des äußeren Profils (50) aufzunehmen, mit dem es verbunden ist, und eine weitere kastenförmige Zone (60) umfasst, deren Oberseite eine Stützfläche für die Dichtung (52) bildet.

15. Struktur nach Anspruch 13, **dadurch gekennzeichnet, dass**, nahe dem Ende des Flanschs (56) des äußeren Profils (50), ein Zahn (61) an der Unterseite vorspringt und mit einer passenden Stufe (61) an einer entsprechenden oberen Fläche des inneren Profils (51), mit dem es verbunden ist, ineinandergreift.

16. Struktur nach Anspruch 13, **dadurch gekennzeichnet, dass** das innere Profil (51) oberhalb seines Flanschs (58) wenigstens einen Ableitungskanal (63) hat, um jegliches Wasser, das durch die Dichtung (52) sickert, aufzunehmen und um das Wasser zu einem Kanalteil (34) innerhalb der Längselemente hin zu befördern.

17. Struktur nach Anspruch 13, **dadurch gekennzeichnet, dass** der Flansch (58) des inneren Profils (51) eine an demselben angeordnete kastenförmige Zone (60) umfasst, die einen Ableitungskanal (64) für jegliches Wasser, das durch die Sitze von Schrauben (53) zum gegenseitigen Befestigen des inneren Profils und des äußeren Profils, die miteinander verbunden sind, sickert, wobei der Ableitungskanal das Wasser zu einem Kanalteil (34) in den Längselementen hin befördert.

18. Struktur nach Anspruch 13, **dadurch gekennzeichnet, dass** die zwei zusammenpassenden Profile (50 und 51) stabil mit ihren U-förmigen Sitzen (54 und 55) an die entsprechenden Kanten der oberen Platten (40) gebunden sind, die als photovoltaische Platten geformt sind.

19. Struktur nach Anspruch 1, **dadurch gekennzeichnet, dass** der kastenförmige Teil (32) mit Hilfe einer Verbindungswand (33), die parallel zu und mit Abstand oberhalb der unteren Fläche (28) angeordnet ist, mit der nächsten mittigen Wand (35) verbunden ist.

20. Struktur nach Anspruch 1, **dadurch gekennzeichnet, dass** ein entsprechender kastenförmiger Teil (39) von jeder mittigen Wand (35) des Mittelprofils vorspringt und eine Kante der photovoltaischen Platte seitlich auf demselben lagert, so dass er ein Element zum Zentrieren der Platte zwischen benachbarten Längselementen (11) bildet.

21. Struktur nach Anspruch 1, **dadurch gekennzeichnet, dass** das Abdeckungsprofil (42) untere Rippen (44) hat, um es an den Enden (36) des Mittelprofils (25), auf denen es lagert, zu zentrieren, vorzugsweise mit wärmeisolierenden Streifen (45), die dazwischen angeordnet sind.

## Revendications

1. Structure de support pour construire une toiture étanche à l'eau en utilisant des modules (12) formés par des panneaux solaires photovoltaïques et/ou thermiques, comprenant des éléments longitudinaux (11) qui sont agencés entre des séries de modules alignés (12), et des éléments transversaux (13) entre un module et le module suivant dans chaque série,
les éléments longitudinaux (11) comprenant à leur tour, un profilé inférieur (20), un profilé central (25) et un profilé de couverture (42) qui sont agencés les uns sur les autres et sont interconnectés entre eux,
le profilé inférieur (20) ayant une section transversale comprenant des brides latérales (21) et deux parois en vis-à-vis parallèles (23),
le profilé central (25) étant monté sur le dessus du profilé inférieur (20) et ayant au niveau du fond, une rainure centrale (26),
le profilé central (25) ayant, le long des côtés de sa rainure centrale (26), deux brides latérales opposées (27), dont chacune définit, au niveau du fond, une surface (28) située au-dessus et faisant face à la bride (21) respective du profilé inférieur (20), les brides (27) du profilé central (25) fournissant des extrémités de support (29) pour des composants (30, 41) agencés entre des éléments longitudinaux (11) adjacents, le profilé central (25) étant fixé à la surface à recouvrir (18) au moyen de vis centrales (46) qui passent à travers le profilé inférieur (20) entre ses deux parois en vis-à-vis parallèles (23),
le profilé central (25), ayant également des parois centrales (35) qui sont verticales et parallèles et avec des extrémités supérieures (36) sur lesquelles le profilé de couverture (42) qui est fixé au profilé central (25) s'appuie,
**caractérisée en ce que** :
le profilé inférieur (20) ayant une section transversale se présentant sous la forme d'un T retourné avec lesdites brides latérales (21) prévues pour être fixées sur une surface (18) à recouvrir avec la structure de support, et une partie centrale du T qui comprend deux parois en vis-à-vis parallèles (23),
la rainure centrale (26), au fond du profilé central (25), reçoit, de manière coulissante, une extrémité supérieure desdites parois (23) du profilé inférieur (20),
chaque bride latérale (27) du profilé central (25) ayant également, formée d'un seul tenant avec cette dernière au niveau du sommet, une partie en forme de boîte (32) qui forme ou reçoit un conduit (17) qui s'étend le long de tout l'élément longitudinal (11) et qui est prévue pour transporter un fluide s'écoulant hors des couvre-joints (15) au niveau d'une extrémité de la série de panneau solaires thermiques interconnectés présents entre une paire d'éléments longitudinaux (11) à proximité d'une extrémité opposée de ladite série de panneaux solaires thermiques interconnectés et qui a des couvre-joints d'entrée (16) pour l'écoulement de fluide dans la série de panneaux solaires thermiques,
au-dessus de la partie en forme de boîte (32), on prévoit un joint d'étanchéité (38) sur lequel le bord latéral d'un panneau supérieur (40) d'un module peut s'appuyer,
le profilé de couverture (42) étant fixé au moyen de vis (49) au profilé central (25) ;
le profilé de couverture (42) ayant, au niveau du fond, une paire de joints d'étanchéité (43) qui sont agencés au-dessus des joints d'étanchéité (38) du profilé central (25) et qui sont situés de l'autre côté d'un panneau supérieur (40) lorsqu'il est monté, afin de former un joint d'étanchéité hydraulique pour l'eau qui tombe sur la surface externe de la structure de support.

2. Structure selon la revendication 1, **caractérisée en ce que** le conduit (17) est formé par un tuyau inséré à l'intérieur de ladite partie en forme de boîte (32).

3. Structure selon la revendication 1, **caractérisée en ce que** les éléments longitudinaux (11) et/ou les éléments transversaux (13) sont au moins partiellement composés de fibre de verre avec une matière de remplissage au carbone.

4. Structure selon la revendication 1, **caractérisée en ce qu'**un canal (34) est formé entre chaque partie en forme de boîte (32) du profilé central (25) et la paroi la plus proche desdites parois centrales (35), ledit canal étant approprié pour recevoir des câbles (37) pour raccorder les panneaux photovoltaïques formant les modules et fournissant un canal de drainage pour l'eau qui est éliminée par lesdits joints d'étanchéité (43 et 38).

5. Structure selon la revendication 1, **caractérisée en ce que** l'élément longitudinal (11) est symétrique par rapport à un plan longitudinal par rapport à sa longueur et perpendiculaire à sa surface de fixation.

6. Structure selon la revendication 1, **caractérisée en ce que** lesdites extrémités de support (29) sont formées par des pattes pliées vers le haut.

7. Structure selon la revendication 1, **caractérisée en ce que** lesdits composants (30) comprennent des panneaux solaires thermiques (41) et/ou des traverses de support.

8. Structure selon la revendication 7, **caractérisée en ce que** lesdites traverses de support sont des traverses en forme de boîte avec une encoche transversale (31) au niveau de chaque extrémité à l'intérieur de laquelle une patte pliée vers le haut desdites extrémités de support (29) se met en prise.

9. Structure selon la revendication 1, **caractérisée en ce que** les panneaux isolants (24) pour l'isolation thermique/sonore et/ou avec une structure de support de charge s'appuient avec leurs bords latéraux sur les brides latérales (21) des profilés inférieurs (20) des éléments longitudinaux (11) adjacents et sont saisis entre ces brides latérales (21) et des brides (29) correspondantes du profilé central (25) en serrant lesdites vis centrales (46).

10. Structure selon la revendication 9, **caractérisée en ce que** les panneaux isolants (24) sont des panneaux prenant les parois en sandwich.

11. Structure selon la revendication 9, **caractérisée en ce que** le profilé inférieur (20) est choisi, en fonction de l'épaisseur desdits panneaux isolants (24), parmi une série de profilés inférieurs (20) avec une hauteur différente desdites parois en vis-à-vis parallèles (23).

12. Structure selon la revendication 1, **caractérisée en ce que** les éléments transversaux (13) comprennent deux profilés correspondants (50, 51) qui sont respectivement montés sur des bords transversaux en vis-à-vis des panneaux supérieurs (40) entre les éléments longitudinaux (11) afin d'être agencés l'un sur l'autre avec un joint d'étanchéité (52) agencé entre eux.

13. Structure selon la revendication 12, **caractérisée en ce que** les deux profilés correspondants (50 et 51) comprennent chacun un bord en forme de U respectif qui définit un siège (54 et 55) qui reçoit un bord correspondant du panneau supérieur (40), l'un des deux profilés ou le profilé externe (50) comprend une bride (56) qui fait saillie vers l'extérieur à partir du côté supérieur du U et dans une direction parallèle à la surface du panneau et l'autre profilé des deux profilés ou le profilé interne (51) comprend à son tour une bride (58) qui fait saillie vers l'extérieur à partir du côté inférieur du U et dans une direction parallèle à la surface du panneau, de sorte que la bride (56) du profilé externe (50) est agencée sur la bride (58) du profilé interne (51), avec ledit joint d'étanchéité (52) agencé entre eux.

14. Structure selon la revendication 13, **caractérisée en ce que** la bride (58) du profilé interne (51) se termine par une surface de contact en forme de L (59) pour recevoir un bord avant du profilé externe (50) auquel elle est assemblée et comprend une autre zone en forme de boîte (60), dont le côté supérieur forme une surface de support pour ledit joint d'étanchéité (52).

15. Structure selon la revendication 13, **caractérisée en ce que**, à proximité de l'extrémité de la bride (56) du profilé externe (50), une dent (61) fait saillie au fond et se met en prise avec un échelon correspondant (61) sur une surface supérieure correspondante du profilé interne (51) à laquelle elle est assemblée.

16. Structure selon la revendication 13, **caractérisée en ce que** le profilé interne (51) a, au-dessus de sa bride (58), au moins un canal de drainage (63) pour recevoir l'eau qui s'infiltre dans ledit joint d'étanchéité (52) et pour transporter ladite eau vers une partie de canal (34) à l'intérieur des éléments longitudinaux.

17. Structure selon la revendication 13, **caractérisée en ce que** la bride (58) du profilé interne (51) comprend, agencée sur cette dernière, une zone en forme de boîte (60) qui forme un canal de drainage (64) pour l'eau qui s'infiltre à travers les sièges des vis (53) pour fixer l'un à l'autre le profilé interne et le profilé externe assemblés, ledit canal de drainage transportant ladite eau vers une partie de canal (34) dans les éléments longitudinaux.

18. Structure selon la revendication 13, **caractérisée en ce que** les deux profilés correspondants (50 et 51) sont reliés de manière stable avec leurs sièges en forme de U (54 et 55) sur les bords correspondants des panneaux supérieurs (40) qui sont formés sous la forme de panneaux photovoltaïques.

19. Structure selon la revendication 1, **caractérisée en ce que** la partie en forme de boîte (32) est raccordée à la paroi centrale (35) la plus proche au moyen d'une paroi de raccordement (33) qui est parallèle à et espacée au-dessus de la surface inférieure (28).

20. Structure selon la revendication 1, **caractérisée en ce qu'**une partie en forme de boîte (39) correspondante fait saillie de chaque paroi centrale (35) du profilé central et un bord du panneau photovoltaïque s'appuie latéralement sur cette dernière, afin de former un élément pour centrer le panneau entre les éléments longitudinaux (11) adjacents.

21. Structure selon la revendication 1, **caractérisée en ce que** le profilé de couverture (42) a des nervures inférieures (44) pour le centrer sur les extrémités (36) du profilé central (25) sur lequel il s'appuie, de préférence avec des bandes d'isolation thermiques (45) agencées entre eux.
